# DEMANDE DE BREVET EUROPEEN

(11) **EP 1 648 065 A1**
(43) Date de publication de la demande: **19.04.2006**
(21) Numéro de dépôt: 05356174.2
(22) Date de dépôt: 26.09.2005
(51) Int. Cl.: H02B 1/50

(54) **Coffret hors sol pour dispositif de raccordement et procédé d'installation d'un coffret**

(30) Priorité: 27.09.2004 FR 0410189
(71) Demandeur: Mecelec, 07300 Mauves (FR); Nexans, 75008 Paris (FR)
(72) Inventeur: Rageau, Laurent, 26600 La Roche de Glun (FR); Chapon, Michel, 07300 Glun (FR); Andre, Patrick, 08000 La Francheville (FR)
(74) Mandataire: Myon, Gérard Jean-Pierre

(57) **Abrégé**

Ce coffret hors sol comprend une enveloppe (2) définissant un volume de réception d'appareillages électriques (7, 9), téléphoniques ou mécaniques et des pieds (4, 5) de fixation au sol. Les pieds (4, 5) sont en nombre de deux et à section extérieure globalement rectangulaire. L'enveloppe (2) est fixée sur chaque pied au moyen d'au moins deux vis (223-225, 233-234) qui comprennent :
i) - une première vis (223, 233) vissée dans un petit côté du pied (4, 5) à travers un orifice circulaire (222d, 232d) ménagé dans une patte (222, 232) solidaire de ladite enveloppe et
ii) - une deuxième vis (225) vissée dans un grand côté ou dans la face d'extrémité (4c, 5c) de ce pied à travers un orifice ménagé dans la patte (222, 232) ou dans un côté (22, 23) de l'enveloppe (2).

## Description

L'invention a trait à un coffret hors sol pour dispositif de raccordement, par exemple pour un réseau de distribution d'énergie ou de communication. L'invention a également trait à un procédé d'installation d'un tel coffret.

Dans le domaine de la distribution d'énergie, notamment pour la distribution d'électricité ou de gaz, il est connu, par exemple de FR-A-2 785 100, d'utiliser des coffrets dans lesquels sont disposés des branchements d'une installation individuelle, les compteurs et/ou les systèmes de lecture à distance de la consommation d'énergie. Ces coffrets comprennent généralement une enveloppe de forme globalement parallélépipédique formée d'une cuve dont une face est ouverte pour permettre l'accès aux appareillages contenus dans les coffrets et d'un pànneau de fermeture articulé ou rapporté sur la cuve. Un tel coffret hors sol peut également comprendre un ou plusieurs fusibles, une sortie en émergence d'un réseau vidéo, informatique ou téléphonique ou d'autres extrémités de réseau énergétique ou de communication.

Quel que soit le type d'appareillage ou de dispositif qu'il est destiné à contenir, un coffret hors sol doit être installé en étant globalement vertical tant dans une direction avant/arrière que dans une direction gauche/droite, dans un souci d'esthétique et pour pouvoir être intégré, le cas échéant, dans une partie de maçonnerie telle qu'un mur d'enceinte de propriété ou un mur extérieur de bâtiment.

Avec les coffrets connus, l'installateur doit veiller à ancrer les pieds d'un coffret dans le sol dans une configuration telle que l'enveloppe du coffret fixée sur ces pieds soit verticale. Or, il arrive que des fouilles effectuées dans le sol pour ancrer les pieds d'un coffret ne soient pas réellement verticalès, notamment dans le cas d'un terrain dur ou dans lequel sont présents de nombreux cailloux. Il arrive en outre que, pendant la prise du béton utilisé pour le scellement des pieds, ceux-ci se déplacent par exemple sous l'effet d'un choc ou sous leur propre poids dans le cas d'un béton trop liquide. Il en résulte que les coffrets actuellement disponibles sont parfois montés en étant inclinés vers l'avant, vers l'arrière, vers la gauche ou vers la droite, ce qui est inesthétique et potentiellement dangereux dans la mesure où ils peuvent faire saillie par rapport à un élément de maçonnerie dans lequel ils devraient être intégrés.

Certains coffrets connus sont pourvus de moyens de réglage de leur inclinaison mais ces moyens sont complexes et relativement difficiles à mettre en oeuvre.

C'est à ces inconvénients qu'entend plus particulièrement remédier l'invention en proposant un coffret hors sol dont l'installation est facilitée et dont la verticalité peut être aisément assurée.

Dans cet esprit, l'invention concerne un coffret hors sol pour dispositif de raccordement, notamment pour un réseau de distribution d'énergie ou de communication, ce coffret comprenant une enveloppe définissant un volume de réception d'appareillages électriques, téléphoniques ou mécaniques ainsi que des pieds de fixation au sol. Ce coffret est caractérisé en ce que les moyens de fixation de l'enveloppe sur les pieds comprennent des moyens de réglage de l'inclinaison de cette enveloppe, par rapport à ces pieds et selon deux directions perpendiculaires, alors que les pieds sont au nombre de deux et à section globalement rectangulaire, et alors que l'enveloppe est fixée sur chaque pied au moyen d'au moins deux vis qui comprennent :
i) une première vis vissée dans un petit côté du pied à travers un orifice circulaire ménagé dans une patte solidaire de l'enveloppe et
ii) une deuxième vis vissée dans un grand côté ou dans la face d'extrémité du pied, à travers un orifice ménagé dans cette patte ou dans un côté de l'enveloppe.

Grâce à l'invention, une fois les pieds immobilisés dans le sol, il est possible d'ajuster aisément l'inclinaison de l'enveloppe selon les deux directions de réglage, ce qui permet d'assurer sa verticalité dans un sens avant/arrière et dans un sens gauche/droite et, par là même, son intégration au paysage urbain ou péri-urbain. Les deux vis permettent une immobilisation efficace de l'enveloppe sur chaque pied au terme du réglage.

Selon des aspects avantageux mais non obligatoires, un tel coffret peut incorporer une ou plusieurs des caractéristiques suivantes prises dans toute combinaison techniquement admissible :
- Une troisième vis peut être utilisée pour la fixation de l'enveloppe sur chaque pied, cette vis étant vissée dans le même petit côté du pied que la première vis, à travers un orifice oblong ménagé dans la patte.
- Un petit côté au moins de chaque pied est pourvu d'une rainure longitudinale de réception de la première vis et, le cas échéant, de la troisième vis précitées.
- Au moins la face d'extrémité supérieure de chaque pied est pourvue d'un logement de réception de la deuxième vis précitée.
- Au moins un grand côté de chaque pied est pourvu d'une rainure longitudinale de réception de la deuxième vis précitée.
- Les pieds sont constitués par des profilés en matériau synthétique et pourvus de nervures internes de renforcement.
- La patte traversée par les première et deuxième vis est monobloc avec une cuve de l'enveloppe du coffret et définit avec des parois principales de cette cuve un logement de réception de l'extrémité supérieure d'un pied, ce logement ayant une section complémentaire de la section de ce pied. Dans ce cas, cette patte comprend avantageusement un voile d'extrémité, monobloc avec la cuve et qui forme une butée d'arrêt à l'introduction de l'extrémité supérieure d'un pied.

L'invention concerne également un procédé d'installation d'un coffret tel que précédemment décrit et plus spécifiquement un procédé dans lequel le montage de l'enveloppe sur les pieds a lieu en coiffant les extrémités supérieures de ces pieds avec des logements de forme correspondante ménagée en partie basse de la cuve, alors que ce procédé comprend des étapes consistant à :
a) solidariser l'enveloppe du coffret avec l'un de ces pieds en vissant modérément une première vis dans un côté de ce pied à travers une première ouverture ménagée dans une patte solidaire de l'enveloppe
b) régler l'inclinaison de l'enveloppe en basculement autour d'un axe perpendiculaire à la paroi arrière de cette enveloppe
c) visser modérément une autre vis dans le même côté de l'autre pied à travers une ouverture ménagée dans une autre patte solidaire de l'enveloppe
d) régler l'inclinaison de l'enveloppe en basculement autour d'un axe parallèle à la paroi arrière de l'enveloppe
e) visser une deuxième vis dans la paroi d'extrémité de chaque pied ou dans un autre de ses côtés, à travers une deuxième ouverture ménagée dans la patte précitée ou dans un côté de l'enveloppe et
f) serrer les vis pour immobiliser l'enveloppe sur les pieds.

Selon un aspect avantageux du procédé de l'invention, une étape supplémentaire peut être prévue, dans laquelle on visse, dans le côté de l'un au moins des pieds qui reçoit une vis à l'étape a) ou à l'étape c), une troisième vis de blocage à travers une ouverture ménagée dans la patte correspondante.

L'invention sera mieux comprise et d'autres avantages de celle-ci apparaîtront plus clairement à la lumière de la description qui va suivre de deux modes de réalisation d'un coffret conforme à son principe et de leurs procédés d'installation, donnée uniquement à titre d'exemple et faite en référence aux dessins annexés dans lesquels :
- la figure 1 est une vue de face d'un coffret conforme à l'invention installé ;
- la figure 2 est une vue de côté du coffret de la figure 1 ;
- la figure 3 est une vue en perspective éclatée de la cuve et des pieds du coffret des figures 1 et 2 en cours d'installation ;
- la figure 3A est une vue à plus grande échelle du détail A à la figure 3 ;
- la figure 4 est une vue en perspective de l'extrémité supérieure d'un pied du coffret des figures 1 à 3 ;
- la figure 5 est une vue de face de principe de la partie inférieure de la cuve et de la partie supérieure des pieds du coffret des figures 1 à 3 dans le cas où les pieds ne sont pas verticaux, vus de face ;
- la figure 6 est une coupe selon la ligne VI-VI à la figure 5 ;
- la figure 7 est une coupe analogue à la figure 6 au niveau du pied 5 lorsque les pieds sont inclinés vers l'avant ;
- la figure 8 est une vue en perspective d'un coffret conforme à un second mode de réalisation de l'invention et
- la figure 9 est une coupe selon la ligne IX-IX à la figure 8.

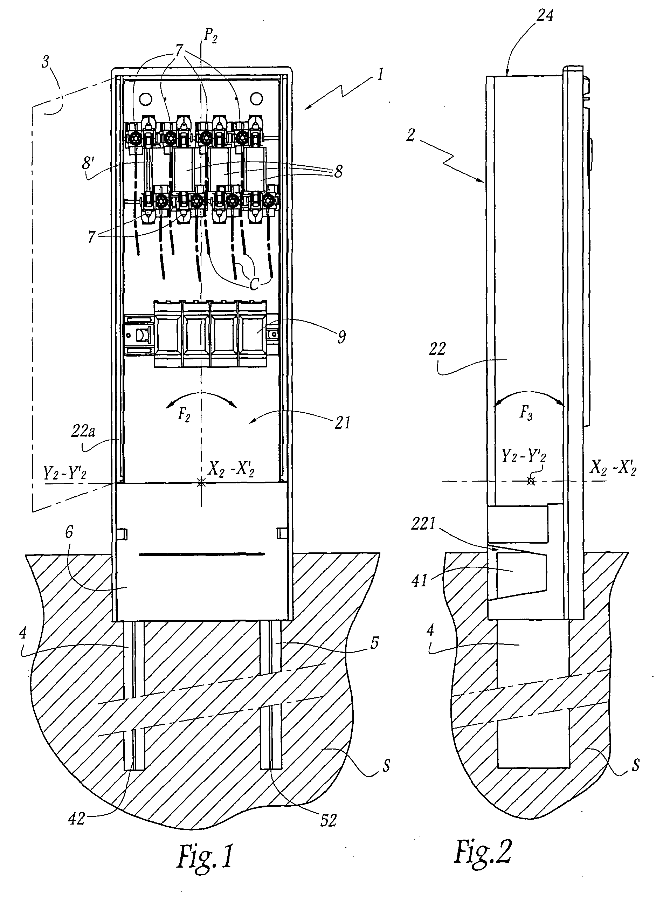

Le coffret 1 représenté sur les figures comprend une cuve 2 réalisée par moulage de matière plastique, par exemple de polypropylène, sur laquelle est montée une porte 3, représentée en traits mixtes à la figure 1 et articulée sur le bord avant 22a d'un côté 22 de la cuve 2. Le coffret 1 est équipé de deux pieds 4 et 5 réalisés par des profilés en matière plastique, par exemple en polypropylène. La cuve 2 est destinée à être montée sur les extrémités supérieures 41 et 51 des pieds 4 et 5 après que ceux-ci ont été scellés dans le sol S.

Une plinthe 6 permet de masquer la partie basse de l'ouverture ménagée sur la face avant de la cuve 2, alors que la porte 3 permet d'obturer sélectivement la partie haute de cette ouverture.

Les éléments 2, 3 et 6 constituent une enveloppe de protection de connecteurs 7 disposés sur deux rangées sur la paroi arrière 21 de la cuve 2 et entre lesquelles peuvent être disposés des fusibles 8 et un barreau conducteur 8' alors que des conducteurs C, représentés uniquement par leurs traits d'axes à la figure 1, sont susceptibles d'être raccordés sur les connecteurs 7. Des dispositifs 9 de raccordement de plusieurs câbles sont également montés sur la paroi 21.

Les côtés 22 et 23 de la cuve 2 définissent deux logements 221 et 231 de réception des extrémités supérieures 41 et 51 des pieds 4 et 5. Ces logements sont définis par deux pattes 222 et 232 venues de matière avec la cuve 2. La patte 222 est formée de trois voiles, à savoir un premier voile 222a globalement parallèle au côté 22, un second voile 222b globalement parallèle à la paroi 21 et s'étendant à proximité du bord 22a, ainsi qu'un troisième voile 222c reliant les bords supérieurs des voiles 222a et 222b au côté 22 et à la paroi 21, ce troisième voile 222c étant globalement parallèle à la face supérieure 24 de la cuve 2.

La patte 232 est symétrique de la patte 222 par rapport à un plan médian P₂ de la cuve 2, perpendiculaire à la paroi 22 et s'étendant à égale distance des côtés 21 et 23.

Le voile 222b est pourvu d'une ouverture 222d qui est circulaire et destinée à être traversée par une première vis 223, elle-même destinée à être vissée dans l'extrémité 41 du pied 4. Le pied 4 est réalisé par un profilé à section extérieure globalement rectangulaire dont les petits côtés 4a sont chacun pourvus d'une rainure 42 longitudinale et centrale, c'est-à-dire s'étendant à égale distance des grands côtés 4b du pied 4. La vis 223 s'engage dans la rainure 42 du petit côté 4a du pied 4 disposé en regard du voile 222b. De la même façon, une vis 233 est prévue pour être engagée, à travers une ouverture 232d ménagée dans un voile avant 232b de la patte 232, dans une rainure 52 ménagée sur un petit côté 5a du pied 5.

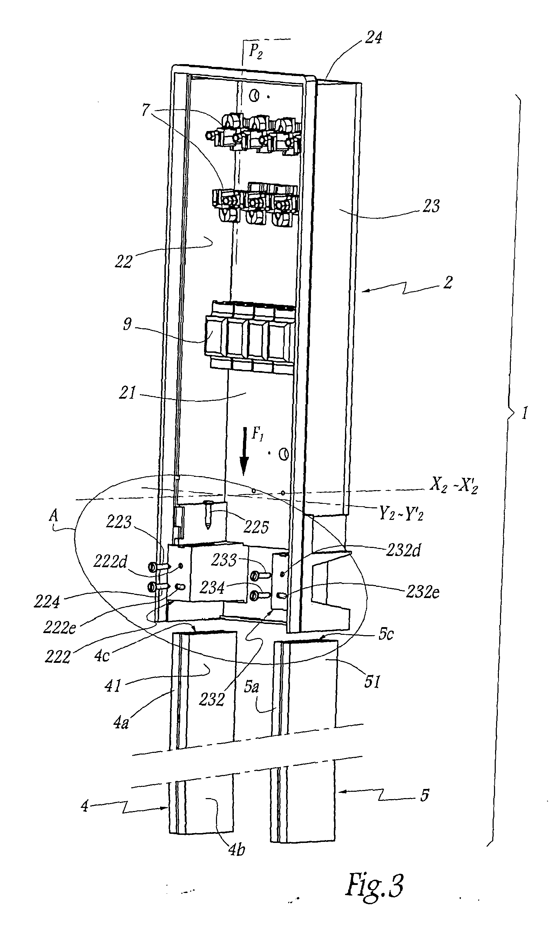

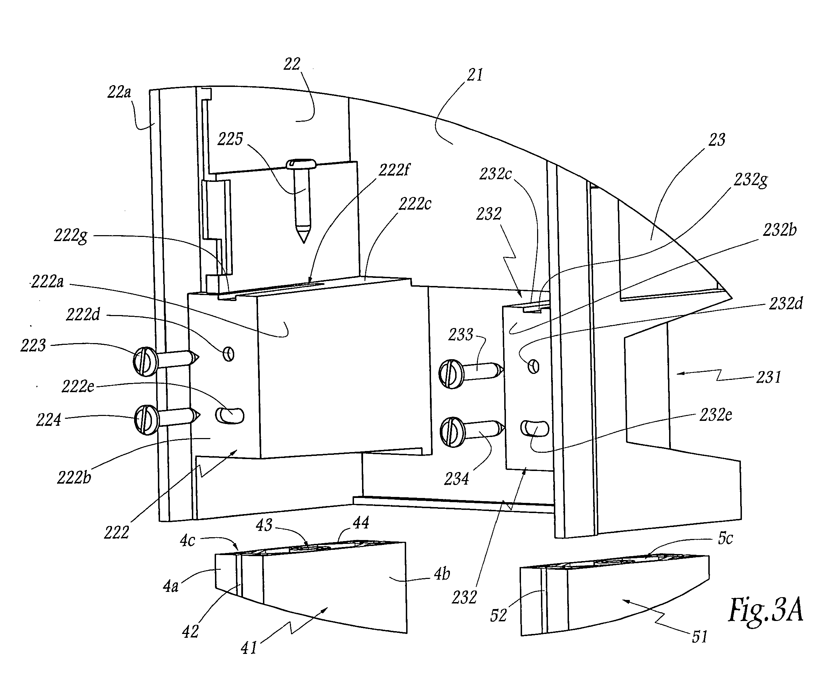

Lors de la mise en place de l'enveloppe 2 sur les pieds 4 et 5 préalablement scellés dans le sol S, l'enveloppe 2 est positionnée au-dessus des extrémités 41 et 51 puis déplacée vers le bas dans le sens de la flèche F₁ à la figure 3, de telle sorte que les côtés 22 et 23 et les pattes 222 et 232 associées coiffent les extrémités 41 et 51 qui sont alors reçues dans les logements 221 et 231. L'une des vis 223 et 233 est alors vissée modérément dans la rainure 42 ou 52 à travers l'une des ouvertures 222d ou 232d, ce qui induit la solidarisation des éléments 2 et 4 ou 2 et 5.

La mise en place de l'enveloppe 2 sur les extrémités 41 et 51 peut avoir lieu jusqu'à ce que ces extrémités viennent en butée contre les voiles supérieurs 222b et équivalent des pattes 222 et 232. Ceci n'est cependant pas obligatoire, ce qui correspond à une possibilité de réglage en hauteur de la cuve 2.

Le réglage de l'inclinaison des côtés 22 et 23, c'est-à-dire le réglage de la verticalité gauche/droite de la cuve 2 est alors effectué en faisant basculer celle-ci autour d'un axe imaginaire X₂-X'₂ perpendiculaire à la paroi 21, parallèle au plan P₂ et passant au niveau du bord supérieur de la plinthe 6.

Le mouvement de basculement opéré éventuellement à cette occasion est représenté par la double flèche F₂ à la figure 1. Lorsque ce réglage en inclinaison gauche/droite a été effectué, il est possible d'immobiliser la cuve 2 dans la bonne position grâce à l'autre vis 233 ou 223 insérée également dans l'autre rainure 52 ou 42 du pied qui n'est pas déjà solidaire de la cuve 2.

Le réglage de l'inclinaison avant/arrière de la cuve 2, c'est-à-dire de son inclinaison autour d'un axe Y₂-Y'₂ parallèle à la paroi 21 et perpendiculaire et sécant avec l'axe X₂-X'₂, est obtenu en agissant sur la cuve 2 pour la faire basculer d'avant en arrière ou réciproquement. Cette possibilité de basculement est représentée par la double flèche F₃ à la figure 2. Lorsque la verticalité avant/arrière de la cuve a été réglée, on insère une vis 225 dans une ouverture 222f ménagée à l'extrémité d'une gorge 222g formée dans le voile 222c sensiblement au milieu de celui-ci, cette ouverture étant globalement alignée avec un canal central 43 du pied 4 qui est défini grâce à des nervures internes 44 du profilé constituant ce pied et qui débouche sur la face d'extrémité supérieure 4c du pied 4. La vis 225 est introduite dans l'extrémité 41 du pied 4 par sa face 4c.

De la même façon, une vis 235 est introduite dans le pied 51 par sa face supérieure 5c, à travers une ouverture 232f du voile 232c correspondant au voile 222c. Une ouverture est prévue à cet effet au niveau d'une rainure 232g formée dans le voile 232c.

Ainsi, les vis 223, 233, 225 et 235 et les ouvertures et logements correspondants permettent à la fois de fixer la cuve 2 sur les pieds 4 et 5 et de régler sa verticalité tant en basculement gauche/droite qu'en basculement avant/arrière, alors que les logements 221 et 231 permettent un pré-positionnement de la cuve avant serrage de ces vis, puis le maintien efficace de la cuve sur les extrémités 41 et 51 dans la mesure où la section horizontale de ces logements correspond globalement à la forme extérieure des extrémités 41 et 51.

Deux ouvertures oblongues 222e et 232e sont respectivement prévues dans les voiles 222b et 232b des pattes 222 et 232. Ces ouvertures oblongues sont prévues pour recevoir chacune une vis 224, respectivement 234 destinées à être également insérées dans les rainures 42 et 52 des pieds 4 et 5. Ces vis 224 et 234 permettent d'assurer un blocage supplémentaire de la cuve 2 par rapport aux pieds 4 et 5 en évitant ainsi tout mouvement de rotation autour de l'axe X₂-X'₂ . Il convient de relever ici que l'utilisation des vis 224 et 234 est facultative.

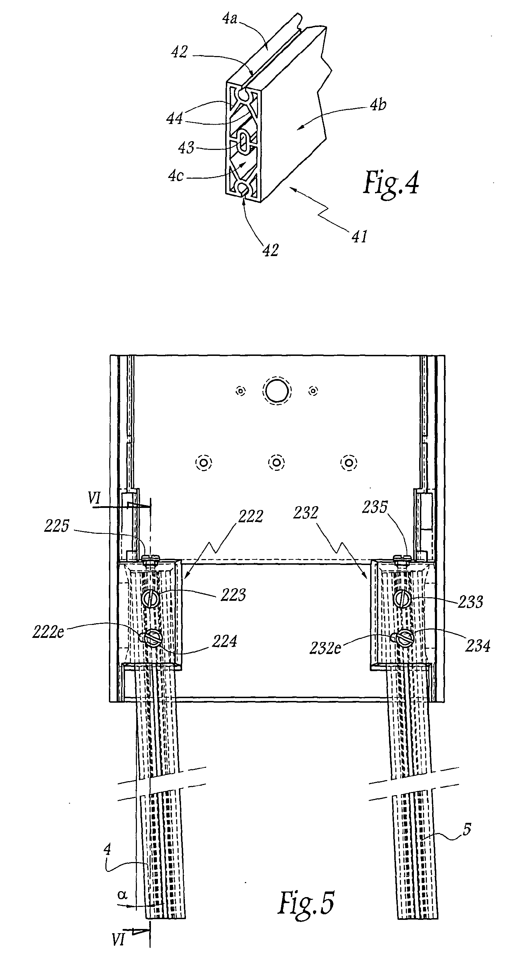

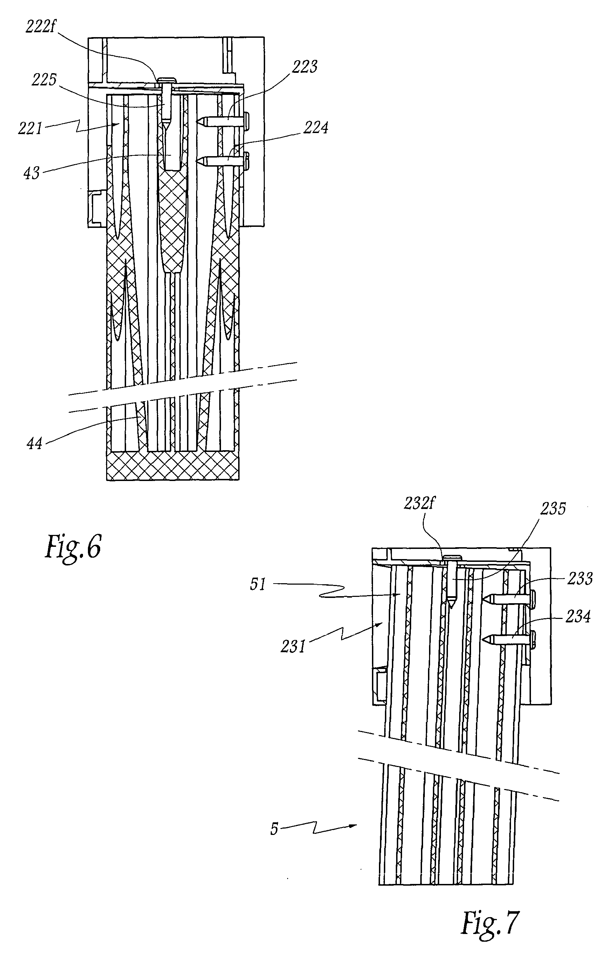

Comme il ressort plus particulièrement des figures 5 et 6, lorsque les pieds 4 et 5 sont inclinés d'un angle α dans le plan de la figure 1, le caractère oblong des ouverture 222e et 232e permet une mise en place des vis 224 et 234 dans les rainures 42 et 52, alors que la verticalité du plan P₂ est assurée.

De même, et comme il ressort plus particulièrement de la figure 7, lorsque les pieds sont inclinés vers l'avant, le positionnement des vis 225 et 235 dans le canal 43 qui est à section oblongue permet d'assurer la verticalité de la paroi arrière 21 de la cuve 2. En effet, le canal 43 est à section oblongue, avec son plus grand axe parallèle aux grands côtés 4b du pied 4, ce qui permet de recevoir la vis 225, y compris lorsque celle-ci est inclinée par rapport à la direction longitudinale du pied 4, du fait du réglage de l'inclinaison avant/arrière autour de l'axe Y₂-Y'₂. Le même arrangement est prévu au niveau de l'extrémité 51. En variante, le canal 43 peut être circulaire.

Une fois les vis 223 à 225 et 233 à 235 en place et le réglage de la verticalité effectué, toutes les vis sont serrées pour immobiliser définitivement la cuve 2 sur les pieds 4 et 5.

Le caractère monobloc des pattes 222 et 232 avec le reste de la cuve 22 évite à l'installateur d'avoir à gérer un stock de pattes à rapporter sur les faces internes de l'enveloppe 2, ce qui facilite son travail.

La mise en place de l'enveloppe 2 a été décrite dans le cas où les pieds 4 et 5 sont tout d'abord scellés. Il est également possible de monter l'enveloppe 2 sur les pieds 4 et 5 avant leur scellement dans le sol. Dans ce cas, les vis 223 et 233 sont engagées dans les rainures 42 et 52 sans être serrées pour permettre le réglage de l'inclinaison comme indiqué ci-dessus. Les étapes b) et c) identifiées ci-dessus sont alors inversées.

La mise en place des vis 224, 234, 225 et 235 a été décrite alors que le réglage en inclinaison, selon les directions gauche/droite respectivement avant/arrière, a déjà été effectué. Il est en fait possible de pré-positionner ces vis dans les ouvertures correspondantes puis de procéder au réglage en inclinaison et, enfin, de serrer fermement ces vis pour immobiliser l'enveloppe 2 par rapport aux pieds 4 et 5.

Selon une variante non représentée de l'invention, une vis supplémentaire peut être prévue au niveau de chaque voile supérieur 222c ou 232c des pattes 222 et 232, ce qui facilite le réglage en inclinaison avant/arrière de la cuve 2. Dans ces cas, la structure interne des profilés constituant les pieds 4 et 5 est adaptée pour constituer deux logements ou canaux de réception de ces vis.

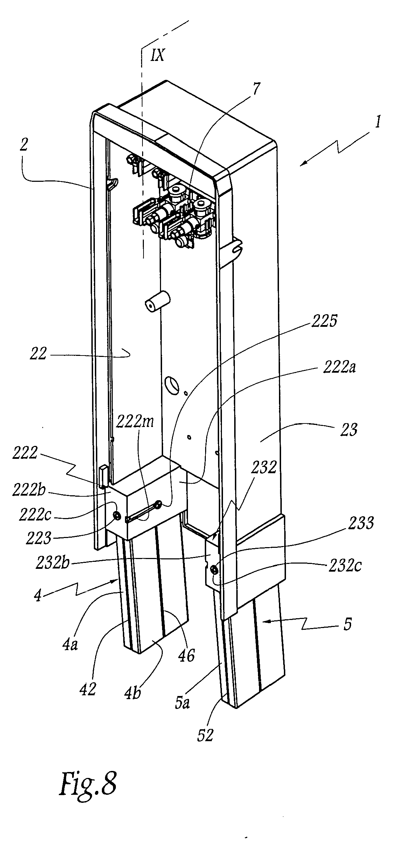

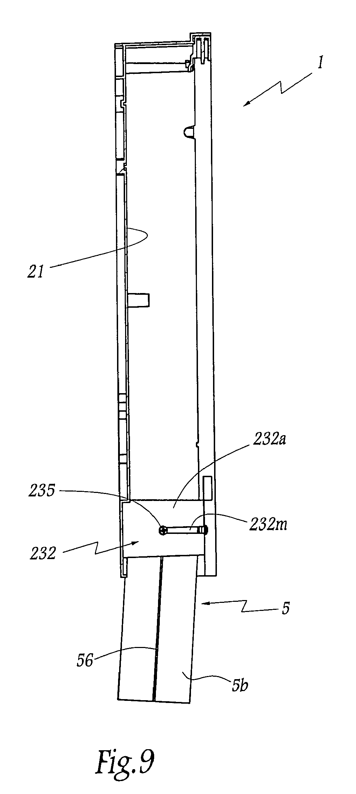

Dans le second mode de réalisation de l'invention représenté aux figures 8 et 9, les éléments analogues à ceux du premier mode de réalisation portent des références identiques. Le coffret 1 de ce mode de réalisation comprend une cuve 2 prévue pour être montée sur deux pieds 4 et 5 destinés à être scellés dans le sol. Des connecteurs 7 sont montés sur la paroi arrière 21 de la cuve 2 pour le raccordement de conducteurs non représentés. Des pattes 222 et 232 sont ménagées à proximité des côtés 22 et 23 de la cuve 2 avec lesquels elles sont monobloc. Les voiles avant 222b et 232b de ces pattes sont chacun percés d'une ouverture circulaire 222c, respectivement 232c, dans laquelle est engagée une vis 223, respectivement 233, destinée à pénétrer dans une rainure 42, respectivement 52, ménagée sur le petit côté 4a, respectivement 5a, des pieds 4 et 5.

Une fente allongée 222m est prévue sur le voile 222a de la patte 222 qui est parallèle au côté 22. Cette fente reçoit une vis 225 qui est engagée dans une rainure longitudinale et centrale 46 ménagée sur un grand côté 4b du pied 4. De la même façon, un voile 232a de la patte 232 est pourvu d'une fente 232m dans laquelle est engagée une vis 235 destinée à pénétrer dans une rainure longitudinale 56 ménagée sur un grand côté 5b du pied 5.

Le caractère allongé des fentes 222 et 232 permet un positionnement des vis 225 et 235 dans les rainures 46 et 56, y compris lorsque les pieds 4 et 5 ne sont pas rigoureusement verticaux, comme dans l'exemple représenté.

Ce mode de réalisation présente l'avantage d'une plus grande simplicité que le premier mode de réalisation.

Selon une variante non représentée de l'invention, la fente 222m pourrait être ménagée sur le côté extérieur 22 de l'enveloppe 2, la fente 232m étant également ménagée sur le côté 23, en partie inférieure de ce côté visible à la figure 8.

L'invention a été représentée dans les deux modes de réalisation avec un coffret renfermant des connecteurs électriques 7. Elle est cependant applicable à tout type de coffrets susceptibles de renfermer d'autres appareillages, par exemple téléphoniques, tels qu'une barrette de raccordement, ou mécaniques, tels qu'un compteur à gaz.

## Revendications

1. Coffret hors sol pour dispositif de raccordement, notamment pour un réseau de distribution d'énergie ou de communication, ledit coffret comprenant une enveloppe définissant un volume de réception d'appareillages électriques, téléphoniques ou mécaniques et des pieds de fixation au sol, **caractérisé en ce que** les moyens de fixation (221-225, 231-235) de ladite enveloppe (2, 3, 6) sur lesdits pieds (4, 5) comprennent des moyens (222d, 222e, 222f, 222m, 223, 224, 225, 232d, 232e, 232f, 232m, 233, 234, 235) de réglage de l'inclinaison de ladite enveloppe par rapport auxdits pieds selon deux directions perpendiculaires (X₂-X'₂, Y₂-Y'₂), **en ce que** lesdits pieds (4, 5) sont au nombre de deux et à section extérieure globalement rectangulaire et **en ce que** ladite enveloppe (2, 3, 6) est fixée sur chaque pied au moyen d'au moins deux vis (223-225, 233-235) qui comprennent :
i) - une première vis (223, 233) vissée dans un petit côté (4a, 5a) dudit pied à travers un orifice circulaire (222d, 232d) ménagé dans une patte (222, 232) solidaire de ladite enveloppe et
ii) - une deuxième vis (225, 235) vissée dans un grand côté (4b, 5b) ou dans la face d'extrémité (4c, 5c) dudit pied à travers un orifice (222f, 232f, 222m, 232m) ménagé dans ladite patte (222, 232) ou dans un côté (22, 23) de ladite enveloppe (2).

2. Coffret selon la revendication 1, **caractérisé en ce que** ladite enveloppe (2, 3, 6) est fixée sur chaque pied au moyen d'une troisième vis (224, 234) vissée dans le même petit côté (4a, 5a) dudit pied (4, 5) que la première vis, à travers un orifice oblong (222e, 232e) ménagé dans ladite patte.

3. Coffret selon l'une des revendications précédentes, **caractérisé en ce qu'**un petit côté (4a, 5a) au moins de chaque pied est pourvu d'une rainure (42, 52) longitudinale de réception de ladite première vis (223, 233) et, le cas échéant, de ladite troisième vis (224, 234).

4. Coffret selon l'une des revendications précédentes, **caractérisé en ce qu'**au moins la face d'extrémité supérieure (4c, 5c) de chaque pied (4, 5) est pourvue d'un logement (43) de réception de ladite deuxième vis.

5. Coffret selon l'une des revendications précédentes, **caractérisé en ce qu'**un grand côté (4b, 5b) au moins de chaque pied (4, 5) est pourvu d'une rainure (46, 56) longitudinale de réception de ladite deuxième vis.

6. Coffret selon l'une des revendications précédentes, **caractérisé en ce que** lesdits pieds sont constitués par des profilés (4, 5) en matériau synthétique pourvus de nervures internes de renforcement (44).

7. Coffret selon l'une des revendications précédentes, **caractérisé en ce que** ladite patte (222, 232) est monobloc avec une cuve (2) de ladite enveloppe et définit avec des parois principales (21-23) de ladite cuve un logement (221, 231) de réception de l'extrémité supérieure (41, 51) d'un pied (4, 5), ledit logement ayant une section complémentaire de la section dudit pied.

8. Coffret selon la revendication 7, **caractérisé en ce que** ladite patte (222, 232) comprend également un voile d'extrémité (222c, 232c), monobloc avec ladite cuve (2) et formant une butée d'arrêt à l'introduction (F₁) de l'extrémité supérieure (41, 51) d'un pied (4, 5).

9. Procédé d'installation d'un coffret hors sol pour dispositif de raccordement, notamment pour un réseau de distribution d'énergie ou de communication, dans lequel on scelle dans le sol des pieds d'ancrage et on monte sur lesdits pieds une enveloppe définissant un volume de réception desdits appareillages ou inversement, **caractérisé en ce que** le montage de ladite enveloppe (2, 3) sur lesdits pieds a lieu en coiffant les extrémités supérieures (41, 51) desdits pieds (4, 5) avec des logements (221, 231) de forme correspondante ménagés en partie basse de ladite cuve et **en ce qu'**il comprend des étapes consistant à :
a) solidariser ladite enveloppe (2, 3) avec l'un desdits pieds en vissant modérément une première vis (223, 233) dans un côté dudit pied à travers une première ouverture (222d, 232d) ménagée dans une patte (222, 232) solidaire de ladite enveloppe
b) régler l'inclinaison (F₂) de ladite enveloppe en basculement autour d'un axe (X₂-X'₂) perpendiculaire à la paroi arrière (21) de ladite enveloppe
c) visser modérément une autre vis (233, 223) dans le même côté de l'autre pied à travers une ouverture (232d, 222d) ménagée dans une autre patte (232, 222) solidaire de ladite enveloppe
d) régler l'inclinaison (F₃) de ladite enveloppe en basculement autour d'un axe (Y₂-Y'₂) parallèle à la paroi arrière de l'enveloppe
e) visser une deuxième vis (225, 235) dans la paroi d'extrémité (4c, 5c) ou dans un autre côté (4b, 5b) de chaque pied, à travers une deuxième ouverture (222f) ménagée dans ladite patte (222, 232) ou dans un côté (22, 23) de ladite enveloppe et
h) serrer lesdites vis pour immobiliser ladite enveloppe sur lesdits pieds.

10. Procédé selon la revendication 9, **caractérisé en qu'**il comprend une étape supplémentaire dans laquelle on visse, dans le côté (4a, 5a) de l'un au moins des pieds (4, 5) qui reçoit une vis à l'étape a) ou à l'étape c), une troisième vis de blocage (224, 234) à travers une ouverture (222e, 232e) ménagée dans la patte correspondante (222, 232).
